Europäisches Patentamt

European Patent Office

Office européen des brevets

(11) Veröffentlichungsnummer: **0 021 023**
**B1**

(12) **EUROPÄISCHE PATENTSCHRIFT**

(45) Veröffentlichungstag der Patentschrift:
27.04.83

(51) Int. Cl.³: **G 01 F 9/00**

(21) Anmeldenummer: **80102756.6**

(22) Anmeldetag: **19.05.80**

(54) **Einrichtung zur Bestimmung des momentanen Kraftstoffverbrauches von Einspritz-Brennkraftmaschinen.**

(30) Priorität: **29.06.79 DE 2926268**

(43) Veröffentlichungstag der Anmeldung:
**07.01.81 Patentblatt 81/1**

(45) Bekanntmachung des Hinweises auf die Patenterteilung:
**27.04.83 Patentblatt 83/17**

(84) Benannte Vertragsstaaten:
**DE FR GB IT**

(56) Entgegenhaltungen:
**DE-A-2 013 752**
**FR-A-2 344 095**
**US-A-2 276 717**
**US-A-3 347 092**

(73) Patentinhaber: **VDO Adolf Schindling AG,
Gräfstrasse 103, D-6000 Frankfurt/Main (DE)**

(72) Erfinder: **Kern, Eckhard, Hofheimer Strasse 35,
D-6238 Hofheim -7 (DE)**

(74) Vertreter: **Könekamp, Herbert, Dipl.-Ing., Sodener
Strasse 9, D-6231 Schwalbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Einrichtung zur Bestimmung des momentanen Kraftstoffverbrauchs von Einspritz-Brennkraftmaschinen

Die Erfindung betrifft eine Einrichtung zum Ermitteln des momentanen Kraftstoffverbrauchs pro Wegstreckeneinheit einer Kraftfahrzeug-Brennkraftmaschine, die von einer Kraftstoffpumpe versorgt wird, bei welcher eine elektrische Schaltung den Kraftstoffverbrauch über die Regelung der Kraftstoffpumpe, die Motordrehzahl und die Fahrgeschwindigkeit unter Einsatz entsprechender Geber ermittelt und anzeigt.

Als mechanisches Stellglied, dessen Bewegung ein Signal über drehzahlabhängig geförderten Kraftstoff liefern kann, ist nicht nur die Regelstange der Einspritzpumpe von Dieselmotoren geeignet. Daher ist es bereits bekannt, einen Stellungsgeber an die Regelstange anzuschliessen (DE-A-2 440 398), um dessen Angaben zur Verbrauchsmessung heranzuziehen. Dies ist jedoch nicht ohne erheblichen Aufwand möglich, da sich die Regelstange im Inneren der Einspritzpumpe befindet und somit nur sehr schwer zugänglich ist. Bei dem Eingriff in die Einspritzpumpe muss mit einer Beschädigung gerechnet werden, die einen schlechteren Wirkungsgrad zur Folge hat. Ausserdem ist es probelmatisch, einen erschütterungs- und temperaturunempfindlichen Geber zu finden, der im Motorraum untergebracht werden kann, der den darin herrschenden Belastungen standhält und auch nach länger dauernder Beanspruchung genau eingestellt bleibt.

Weiterhin ist aus der FR-A-2 344 095 eine Regelung der Einspritzpumpe einer Brennkraftmaschine bekannt, deren Fördervolumen in Abhängigkeit von der Motordrehzahl geregelt wird. Dabei wird auf optischem Weg eine Regelkurve an einer mechanisch in Abhängigkeit von der Motordrehzahl verstellbaren Kurvenscheibe abgegriffen. Neben der komplizierten Mechanik besteht die Gefahr, dass durch Änderung der unterschiedlichen Transparenz der Kurvenscheibe aufgrund von Materialalterung sowie Verschmutzung keine korrekten Signale geliefert werden, was zu einer fehlerhaften Regelung führt.

Der Erfindung liegt die Aufgabe zugrunde, eine Einrichtung nach dem Oberbegriff zu schaffen, die mit dauerhaften, einfachen und unempfindlichen Mitteln Angaben über drehzahlabhängige Kraftstofförderung liefert.

Diese Aufgabe wird erfindungsgemäss dadurch gelöst, dass die Kennlinien der Regelstange der Kraftstoffpumpe durch eine elektrische Schaltung nachgebildet werden, die ein elektrisches Signal von einem die Stellung des Fahrpedals abgreifenden Geber erhält und aus diesem zusammen mit von dem Motordrehzahlgeber abgeleiteten Signalen ein Kraftstoffverbrauch-Motordrehzahl-Kennlinienfeld entsprechend dem Kennlinienfeld der Regelung der Kraftstoffpumpe bildet. Da die dazu erforderliche Schaltung nicht im Motorraum angeordnet werden muss, kann sie vorteilhaft mit einfachen, weniger belasteten Bauelementen kostengünstig hergestellt werden.

Eine besonders vorteilhafte Weiterbildung der Erfindung besteht aus einer mit wenigen Bauteilen herstellbaren elektrischen Schaltung, die für unterschiedliche Abschnitte der Kennlinien verschiedene Signalerzeuger hat, bei der insbesondere die Signalerzeuger abstimmbare Verstärker sind und die Abschnitte der Kennlinien von einer Spannungsteilerkette nachgebildet werden, an der die Verstärker parallel angeschaltet sind.

Weitere Vorteile der Erfindung werden anhand des in der Zeichnung schematisch dargestellten Ausführungsbeispiels sowie eines Diagramms für den Verlauf von Kennlinien der Einspritzpumpe näher erläutert. Es zeigen:

Figur 1 ein Blockschaltbild der Einrichtung,

Figur 2 ein Diagramm von Kennlinien der Regelstange einer Einspritzpumpe von Dieselmotoren und

Figur 3 eine Schaltung zum Nachbilden der Kennlinien der Regelstange.

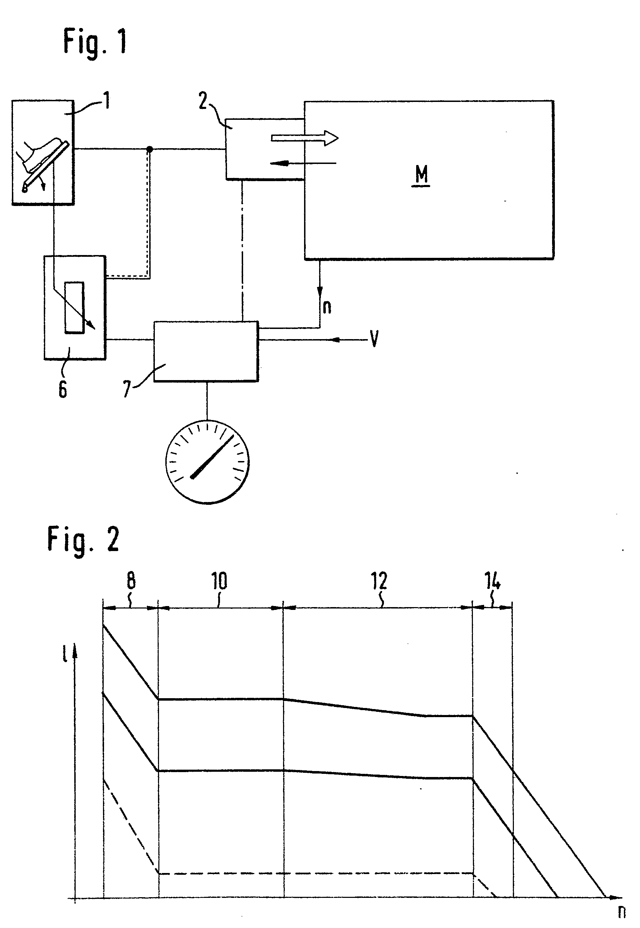

Im Blockschaltbild der Figur 1 wirkt das Fahrpedal 1 über die Einspritzpumpe 2 auf den Motor M, um in Abhängigkeit von der Motordrehzahl, die mit dem einfach gezeichneten Pfeil direkt auf die Einspritzpumpe übertragen wird, in Richtung des Doppelpfeiles soviel Kraftstoff liefert, wie durch die Regelstange eingestellt ist. Wie bekannt, ist eine Regelung zur Einstellung eines Gleichgewichtes zwischen Kraftstofffördermenge und gewünschter Fahrgeschwindigkeit erforderlich.

Aus der DE-A-2 414 398 ist nunmehr bekannt, auf strichpunktiert gezeichnetem Weg ein Signal über die Auslenkung der Regelstange abzuleiten. Dieses Signal kann mit einem Geschwindigkeits-(V) und einem Drehzahlsignal (n), dem eine bestimmte Stellung des Fahrpedals 1 zugeordnet wird, kombiniert und in Angaben über den momentanen Kraftstoffverbrauch umgerechnet werden.

Die Erfindung geht von dem am Potentiometer-Geber 6 anstehenden Signal ohne Eingriff in die Einspritzpumpe 2 aus, aus dem in der elektrischen Schaltung 7 ein der Kennlinie der Einspritzpumpe bzw. des Kraftstoffverbrauchs entsprechendes Signal erzeugt wird. Die Erfindung kann davon ausgehen, dass insbesondere Einspritzpumpen aus anderen Gründen derart präzise hergestellt sein und funktionieren müssen, dass sich die Kennlinie mechanischer Stellungsgeber im Laufe der Lebensdauer eines Motors nicht wesentlich ändert. Mit der gleichen Zuverlässigkeit, mit der Einspritzpumpen und Motoren arbeiten, kann daher mit Hilfe einer Schaltung, die den Verbrauchskennlinien entsprechende Signale liefert, eine Angabe über den momentanen Kraftstoffverbrauch gemacht und in Volumen pro Weg oder Zeit angezeigt werden.

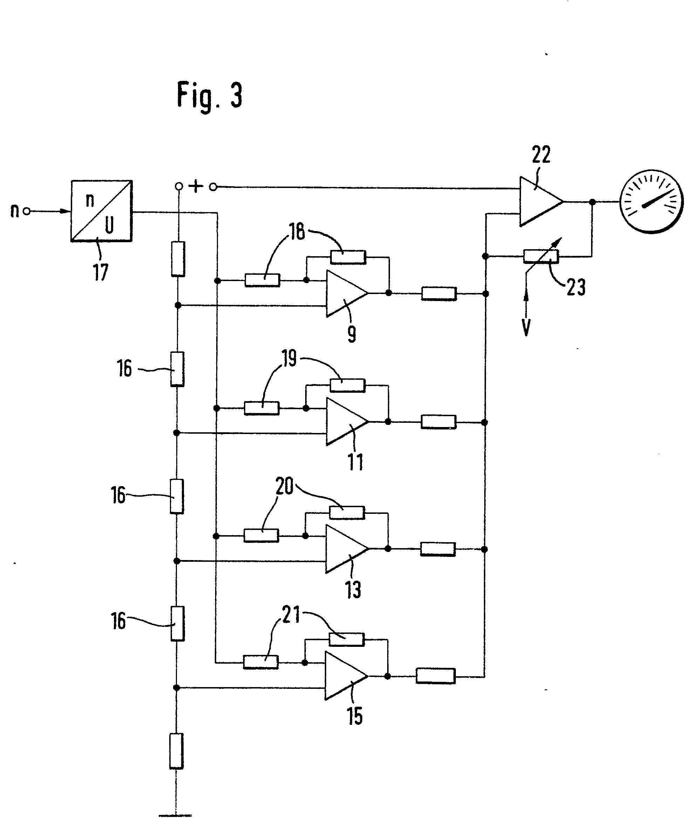

Figur 2 ist ein Diagramm über Regelkennlinien in Abhängigkeit von der Drehzahl. Eine Kennlinie entspricht dem Verlauf des Weges einer Regelstange einer Einspritzpumpe in Abhängigkeit von der Stellung des Fahrpedals 1. Den jeweiligen Regelbereichen ist, wie aus Figur 3 ersichtlich, ein Verstärker zugeordnet. Im einzelnen ist dem Anfahrbereich 8 der Verstärker 9, dem Fahrbereich unterer Drehzahlen 10 der Verstärker 11, dem Ausgleichsbereich 12 der Verstärker 13 und dem Bereich der Endabregelung 14 der Verstärker 15 zugeordnet. Die Verstärker 9 bis 15 sind parallel an einer Spannungsteilerkette 16 angeschlossen, deren Bewertungswiderstände den Verstärkern und den Abschnitten der Kennlinien entsprechende Wirkungsbereiche zuordnen. Die Differenzverstärker 9 bis 15 werden parallel von Signalen eines Wandlers 17 versorgt, der ein der Drehzahl entsprechendes Spannungssignal erzeugt.

In der Schaltung aus Figur 3 ist der jeweilige, der Steigung des zugehörigen Kennlinienbereichs angepasste Verstärkungsgrad der Verstärker 9, 11, 13, 15 mit Hilfe von Bewertungswiderständen 18, 19, 20, 21 einstellbar. Diese von den Verstärkern gelieferten Ausgangssignale werden einem gemeinsamen Verstärker 22 zugeleitet, dessen Bewertungswiderstand 23 von der Geschwindigkeit abhängig einstellbar ist und das gewünschte Anzeigesignal über den Verbrauch an ein Instrument liefert.

Kennlinien der vorgeschriebenen Art sind natürlich auch mit anderen elektrischen Einrichtungen für andere Maschinen je nach Genauigkeitsanforderung mit geringem oder grösserem Bauelementenaufwand herstellbar und zur Verbrauchsanzeige verwendbar.

**Ansprüche**

1. Einrichtung zum Ermitteln des momentanen Kraftstoffverbrauchs pro Wegstreckeneinheit einer Kraftfahrzeug-Brennkraftmaschine, die von einer Kraftstoffpumpe versorgt wird, bei welcher eine elektrische Schaltung den Kraftstoffverbrauch über die Regelung der Kraftstoffpumpe, die Motordrehzahl und die Fahrgeschwindigkeit unter Einsatz entsprechender Geber ermittelt und anzeigt, dadurch gekennzeichnet, dass die Kennlinien der Regelstange der Kraftstoffpumpe (2) durch eine elektrische Schaltung (7) nachgebildet werden, die ein elektrisches Signal von einem die Stellung des Fahrpedals (1) abgreifenden Geber (6) erhält und aus diesem zusammen mit von dem Motordrehzahlgeber (17) abgeleiteten Signalen ein Kraftstoffverbrauch-Motordrehzahl-Kennlinienfeld entsprechend dem Kennlinienfeld der Regelung der Kraftstoffpumpe (2) bildet.

2. Einrichtung nach Anspruch 1, dadurch gekennzeichnet, dass die elektrische Schaltung (7) für unterschiedliche Abschnitte (8, 10, 12, 14) der Kennlinien verschiedene Signalerzeuger (9, 11, 13, 15) hat.

3. Einrichtung nach Anspruch 2, dadurch gekennzeichnet, dass die Signalerzeuger (9, 11, 13, 15) abstimmbare Verstärker sind.

4. Einrichtung nach Anspruch 3, dadurch gekennzeichnet, dass die Abschnitte (8, 10, 12, 14) der Kennlinien von einer Spannungsteilerkette (16) nachgebildet sind, an der die Verstärker (9, 11, 13, 15) parallel angeschaltet sind.

**Revendications**

1. Dispositif pour déterminer la consommation de carburant par unité de distance parcourue, à un instant considéré, du moteur à combustion interne d'un véhicule automobile alimenté par une pompe de carburant, dans lequel un circuit électrique détermine et affiche, en utilisant de émetteurs correspondants, la consommation de carburant par l'intermédiaire du réglage de la pompe à carburant, de la vitesse angulaire du moteur et de la vitesse de déplacement, dispositif caractérisé par le fait que les courbes caractéristiques de la tige de réglage de la pompe de carburant (2) sont reproduites par un circuit électrique (7) qui reçoit un signal électrique délivré par un émetteur (6) captant la position de la pédale d'accélération (1) et qui, à partir de ce signal et conjointement à des signaux dérivés de l'indicateur (17) de vitesse angulaire du moteur, forme un réseau de courbes caractéristiques de la vitesse angulaire du moteur et de la consommation de carburant correspondant au réseau de courbes caractéristiques du réglage de la pompe à carburant (2).

2. Dispositif selon la revendication 1, caractérisé par le fait que le circuit électrique (7) comporte différents émetteurs de signaux (9, 11, 13, 15) pour des tronçons différents (8, 10, 12, 14) des courbes caractéristiques.

3. Dispositif selon la revendication 2, caractérisé par le fait que les émetteurs de signaux (9, 11, 13, 15) sont des amplificateurs accordables.

4. Dispositif selon la revendication 3, caractérisé par le fait que les tronçons (8, 10, 12, 14) des courbes caractéristiques sont reproduits par une chaîne de diviseurs de tension (16) sur laquelle les amplificateurs (9, 11, 13, 15) sont branchés en parallèle.

**Claims**

1. Apparatus for determining the instantaneous fuel consumption per unit of distance travelled of an automobile internal combustion engine which is supplied by a fuel pump, wherein an electric circuit determines and indicates the fuel consumption by way of the control of the fuel pump, the engine speed and the speed of travel with the use of corresponding sensors, characterised in that the characteristic curves of the control rod of the fuel pump (2) are simulated by an electric circuit (7) which receives an electric signal from a sensor (6) picking up the position of the accelerator pedal (1) and forms therefrom, together with signals derived from the engine speed sensor (17), a fuel-consumption/engine-speed characteristic-curve envelope corresponding to the characteristic-curve envelope of the control of the fuel pump (2).

2. Apparatus according to Claim 1, characterised in that the electric circuit (7) has different signal generators (9, 11, 13, 15) for different sections (8, 10, 12, 14) of the characteristic curves.

3. Apparatus according to Claim 2, characterised in that the signal generators (9, 11, 13, 15) are tunable amplifiers.

4. Apparatus according to Claim 3. characterised in that the section (8, 10, 12, 14) of the characteristic curves are simulated by a series of voltage dividers (16) to which the amplifiers (9, 11, 13, 15) are connected in parallel.

# Fig. 1

# Fig. 2

Fig. 3